# EUROPEAN PATENT APPLICATION

(11) **EP 1 650 876 A1**
(43) Date of publication of application: **26.04.2006**
(21) Application number: 04025303.1
(22) Date of filing: 25.10.2004
(51) Int. Cl.: H04B 1/16

(54) **Means and methods in a radio network**

(71) Applicant: ANDREW CORPORATION, Orland Park Illinois 60462 (US)
(72) Inventor: Johansson, Mathias, 168 69 Bromma (SE)
(74) Representative: Lindberg, Olle Nils Olof

(57) **Abstract**

The invention provides a radio base station (200) comprising at least two receiving branches (201, 202) interconnected with demodulation means (230) wherein at least one of said receiving branches (201) is fed by power supply control means differentiating the power control for said at least one receiving branch from the other receiving branches (202). The power supply may be constantly turned on/(off) for those receiving branches connected/(not connected) with an antenna or, alternatively, the power is turned on/off during time periods T2/T1 for those branches connected with an antenna. The demodulation means (230) is normally a rake receiver unit comprising a rake finger control unit (205), a set of rake fingers 1-M, and at least one combiner (220) wherein said demodulation means provide a dynamic allocation of at least one rake finger to serve any one of said receiving branches (201, 202) and combiners (220).

## Description

### Field of the invention

The present invention relates generally to methods and means in radio networks, and more specifically to the design of radio base station receivers.

### Background

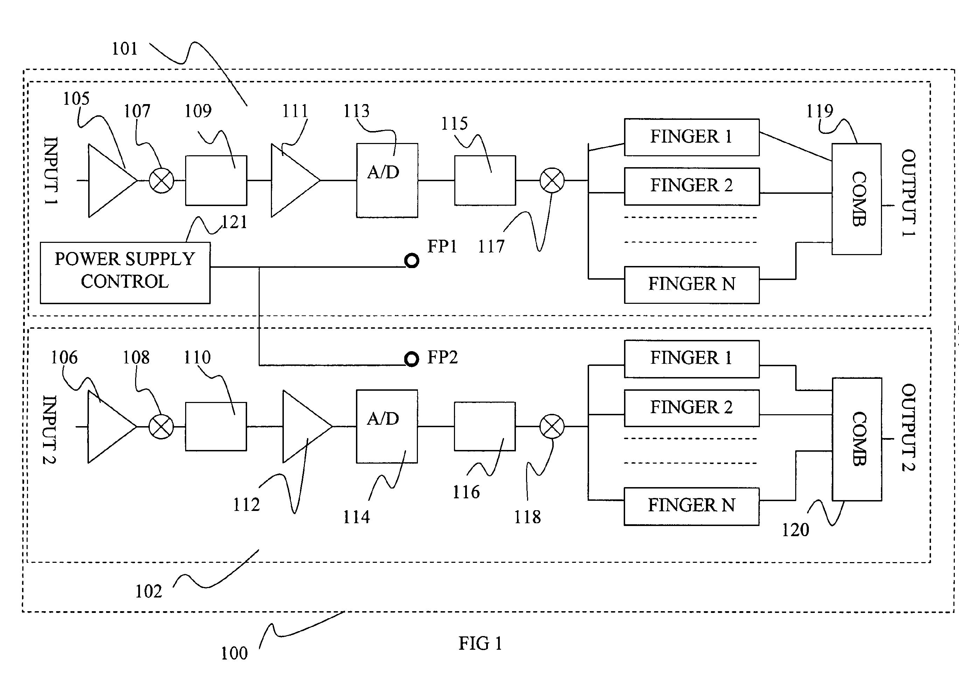

Fig. 1 is a schematic diagram with functional blocks illustrating some main functional blocks of a conventional radio base station receiver 100 which are of interest for the present invention. The receiver 100 has multiple receiving branches with respective antenna input connections, illustrated in Fig. 1 by receiving branches 101, 102 and input connections INPUT 1 and INPUT 2 As shown in Fig. 1, each branch comprises a connection, INPUT 1, INPUT 2, an LNA (Low Noise Amplifier) 105, 106, a mixer 107, 108, a filter 109, 110, an amplifier 111, 112, an A/D (Analog to Digital)-converter, 113, 114, a digital filter, 115, 116, a digital down-converter 117, 118, and a respective rake receiver unit comprising a number of rake fingers 1-N and a respective combiner 119, 120 forming the respective user data output signal, OUTPUT 1, OUTPUT 2, for each channel. Each channel (associated with a specific user and/or MS, Mobile Station) is demodulated by its own set of rake fingers interconnected with its respective combiner, however, only one set of rake fingers 1-N with corresponding interconnected combiners 119 and 120, each demodulating one specific channel, are illustrated in branches 101 and 102, in Fig. 1 Thus, in Fig. 1, the illustrated set of rake fingers 1-N in branch 101 interconnected with combiner 119 demodulate one channel, i.e. associated with a single MS, and the set of rake fingers 1-N in branch 102 interconnected with combiner 120 demodulate another channel associated with another MS. Normally, each branch serves about 80 MSs, meaning that there are 79 more sets of rake fingers, not illustrated in Fig. 1, each rake finger set interconnected with its own combiner and fed from down-converters 117 or 118, respectively, in branches 201 and 202. The elements 105-118 in Fig. 1 are normally discrete components or commercial chips ready to use. The rake receiver functions, such as the rake fingers and combiners, are normally realised as software running on DSP's or programmable hardware logic, e.g. programmable ASIC circuits.

The feeding points FP 1 and FP2 provide the power supply for all branch elements in branches 101 and 102 respectively, in Fig. 1. All branches are powered together by essentially the same power supply voltage, illustrated by power supply control unit 121 in Fig. 1. The power supply control unit 121 is made up of one main power supply circuit (not shown) from which all receiver components/elements are fed. The main power supply circuit is normally controlled by manually switching on/off a breaker relay interconnecting the main power circuit with an external power source, such as batteries and/or a suitably transformed supply voltage from the power grid network. Therefore, the power supply is either turned on or off for all receiving branches giving no possibility to differentiate the power control of individual receiving branches from other receiving branches, i.e. the power voltage at the respective branch feeding points FP 1 and FP 1 are essentially the same in Fig. 1.

A problem with this conventional design is that that a considerable amount of power is wasted for non active receiving branches not connected with an antenna, resulting in undesirable heat production and unnecessary costs of operation and maintenance.

A general object when designing radio base stations, is the strive to integrate as many functions as possible in one chip/DSP/circuit board in order to reduce the complexity and/or the number of components and/or the amount of material, so as to decrease the cost of production and/or usage. It is also important to make the base station as small and low weight as possible, thereby reducing the cost of transportation and/or installation. This is of particular relevance for so called pico base stations, which may use only one DSP. The heat production is critical when integrating as many processing functions as possible in as a small processing area/space as possible in a radio base station. The heat production may also per se require extra cooling and even render the base station unsuitable for certain environments or sites, due to an elevated risk of malfunctioning, with detrimental effects regarding network signal quality and therefore also regarding network capacity and/or interference and/or power consumption.

Also, in case of power failure, an unneccerily high base station power consumption will decrease the effective operational time for backup batteries, thus increasing the risk of traffic shut down for (at least a part of) the radio network, causing economical losses for the operator. In the worst case a shut down may hinder other fundamental infrastructure in the society to function properly, e.g. the start up of power plants often require a properly functioning telecommunications system.

Another problem with the conventional design of base stations comprising rake receivers, i.e. CDMA-base stations, is that the design does not allow for the individual receiving branches to dynamically share the same rake fingers, thereby increasing the cost of manufacturing the base station and/or reducing the quality of the user data output signal from the base station rake receiver. This also means that the mobile terminal must transmit at a higher power level to compensate for this decreased up-link signal quality, which is of course undesirable for a number of reasons, e.g. shortens useful battery operational time, increases network interference and so on.

None of the above identified problems/drawbacks associated with the conventional radio base station receiver design are admitted by the applicant to constitute prior art by their mention in this background section.

### Summary of the invention

The general object of the present invention is to overcome/alleviate problems and drawbacks originating from the design of conventional radio base stations, such as the problems mentioned above.

One object of the present invention is to reduce the complexity and cost for producing and/or using and/or installing a radio base station in an efficient way.

Another object is to improve the security and decrease the risk of shut down of a radio base station due to power failure.

Still another object of the present invention is to reduce the power consumption of radio base stations in general and base stations for cellular radio networks in particular.

A further object of the present invention is to provide a possibility to increase the capacity and/or decrease the interference in a radio network.
Still a further object of the present invention is to provide a possibility for increasing the end user signal quality and/or decrease the power consumption for mobile terminals communicating with radio base stations with a design according to the invention.

According to a first aspect, the present invention provides a radio base station comprising at least two receiving branches interconnected with demodulation means wherein at least one of said receiving branches is fed by power supply control means differentiating the power control for said at least one receiving branch from the other receiving branches.

In one embodiment, said power supply control means is arranged so that the power supply is constantly turned off for those receiving branches not connected with an antenna and constantly turned on for those receiving branches connected with an antenna.

In another embodiment, the power supply for those receiving branches connected with an antenna but lacking up-link traffic is turned off during periodical time periods T 1 and turned on during periodical time periods T2. The radio base station can further be arranged to listen for a traffic channel request sent from a mobile terminal on a Random Access Control Channel during said time period T2, and T 1 can be selected to about 4 seconds and T2 to about 1 second.

According to one embodiment, said demodulation means is a rake receiver unit comprising a rake finger control unit, a set of rake fingers 1-M, and at least one combiner wherein said demodulation means is arranged for a dynamic allocation of at least one rake finger, from said set of fingers 1-M, so that said at least one rake finger can be allocated to serve any one of said receiving branches.

According to another embodiment, said demodulation means is arranged so that any one of said rake fingers 1-M can be allocated to serve said combiner.

In still another embodiment, said power supply control means comprises means for measuring the signal power at a point lying on the information signal path associated with said at least one receiving branch.

In still another embodiment, said power supply control means is arranged to control a switch for short-cutting at least one LNA in said at least one receiving branch.

According to another aspect, the invention provides a radio base station having at least two antenna receiving branches interconnected with demodulation means wherein said demodulation means is a rake receiver unit comprising a rake finger control unit, a set of rake fingers 1-M, and at least one combiner, and said demodulation means is arranged for a dynamic allocation of at least one rake finger, from said set of fingers 1-M, so that said at least one rake finger can be allocated to serve any one of said receiving branches.

In one embodiment, the radio base station according to the invention has demodulation means in form of a rake receiver comprising a rake finger control unit, a set of rake fingers 1-M, and at least one combiner, wherein said demodulation means is arranged so that said combiner can be allocated any one of said rake fingers 1-M.

According to a third aspect, the invention provides a method for controlling the power supply of a radio base station comprising at least two receiving branches interconnected with demodulation means, the method comprising the following steps:
- establishing an antenna state, AS, for said base station, comprising information regarding which branches are connected with an antenna/external-device,
- differentiating the power supply for at least one of said branches from the other branches based on said AS.

In one embodiment, said step of differentiating the power supply for at least one of said branches from the other branches based on said AS comprises the following steps:
- to constantly turn off the power supply for those receiving branches not connected with an antenna according to said AS, and,
- to constantly turn on the power supply for those receiving branches connected with an antenna according to said AS.

In another embodiment, the step of differentiating the power supply for at least one of said branches from the other branches, based on said AS comprises the following step:
- to periodically turn off the power supply, for a time period T1, for those receiving branches connected with an antenna according to said AS but lacking up-link traffic, and to periodically turn on the power supply, for a time period T2, for said receiving branches connected with an antenna but lacking up-link traffic.

In still another embodiment, the method according to the invention further comprises the following step:
- to listen for a traffic channel request sent from a mobile terminal on a Random Access Control Channel during said time period T2, and to set T1 to about 4 seconds and T2 to about 1 second.

In another embodiment, the method according to the invention comprises the following steps:
- to realise said demodulation means as a rake receiver unit comprising a rake finger control unit, a set of rake fingers 1-M, and at least one combiner, and,
- to dynamically allocate at least one rake finger, from said set of fingers 1-M, so that said at least one rake finger instantaneously serves any one of said receiving branches.

In another embodiment, the method according to the invention further comprises the step of:
- allocating any one of said rake fingers 1-M to serve said combiner.

In still a further embodiment, the method according to the invention further comprises the steps of:
- measuring the signal power at a point lying on the information signal path associated with said at least one receiving branch, and
- forming said AS based on said measurement.

According to a fourth aspect, the invention provides a method for allocating rake fingers in a radio base station comprising demodulation means by carrying out the following steps:
- realising said demodulation means in form of a rake receiver unit comprising a rake finger control unit, a set of rake fingers 1-M, and at least one combiner, and
- dynamically allocate at least one rake finger, from said set of fingers 1-M, so that said at least one rake finger instantaneously serves any one of said receiving branches.

In one embodiment, the method according to the invention comprises the step of:
- arranging said demodulation means so that said combiner can be allocated any one of said rake fingers 1-M.

Even though the present invention has been summarised above, the invention is defined by the appended claims 1-19.

Still further objects and advantages of the present invention will become apparent when reading the following description together with the accompanying drawings.

### Brief description of the drawings

Figure 1 illustrates a base station receiver according to the prior art
Figure 2 illustrates a base station receiver according to the present invention
Figure 3A is a flowchart illustrating the power control algorithm according to the present invention.
Figure 3B illustrates the time cycle for the power control according to one embodiment of the present invention.
Figure 4 is a flowchart illustrating the rake finger allocation algorithm according to the present invention.

### Detailed description

The present invention is based on the recognition of a series of problems/drawbacks of the conventional design of radio base stations, as those mentioned above. A general aspect of the invention is applicable for radio base stations designed according to an arbitrary radio communications standard and/or access method such as GSM, D-AMPS, UMTS and/or FDMA, TDMA, CDMA, (W)CDMA etc. Specific embodiments are particularly advantageous for the CDMA access method.

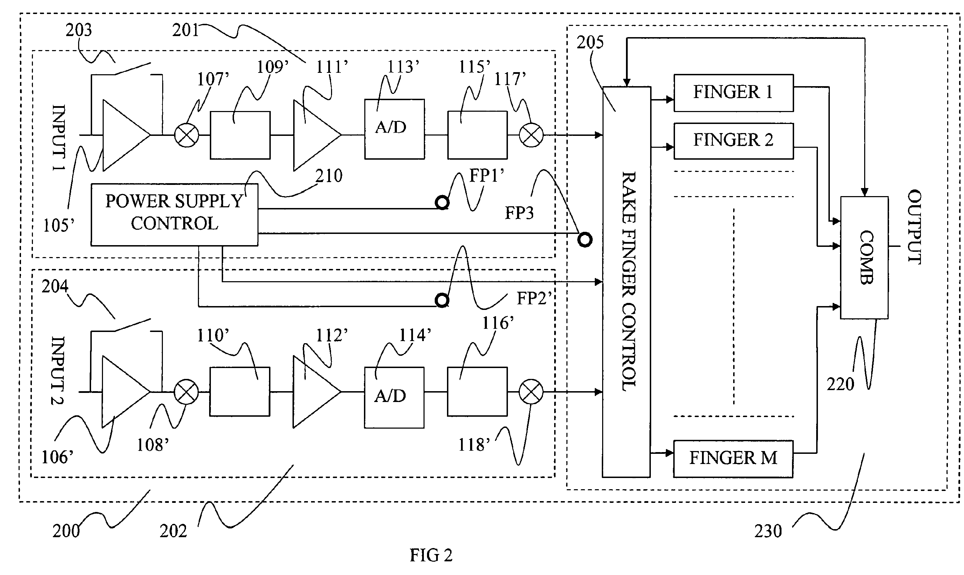

Fig. 2 is a schematic block diagram illustrating a radio base station receiver unit 200 according to the invention. The receiver comprises at least 2 receiving branches, illustrated by branches 201 and 202in figure 2, i.e. each antenna input, INPUT 1, INPUT 2, has its own associated receiving branch. The receiver unit 200 can be used in different configurations together with external equipment, such as antennas with/without boosters, connected to one or more receiving branches. Each receiving branch normally comprises a conventional LNA (Low Noise Amplifier), 105', 106', which according to the invention can be bypassed, e.g. to compensate for a booster's external amplification of the input antenna signal, a conventional IF- (Intermediate Frequency) part comprising a mixer 107', 108', an AF (Analog Filter), 109', 110', an Amplifier, 111', 112', an ADC (Analog to Digital Converter), 113', 114', conventional digital filter (DF), 115', 116', and digital down converter, 117', 118'. "Booster" is here referred to as any low-noise amplifier connected between an external antenna and INPUT 1 or INPUT 2 in Fig. 2 in order to compensate for signal attenuation in cables etc. The receiving branches are realised by conventional components, e.g. the digital filters, 115', 116' and down converters 117', 118', are realised by programmable logic chips such as ASIC:s. The actual demodulation is performed by the demodulation means 230.

In one embodiment, the demodulation means 230 demodulates CDMA-signals and is formed by a rake receiver unit, as illustrated in Fig. 2, comprising a rake finger control unit, 205, having input information signal connections from each and all of the receiving branches, i.e.from 117' and 118' in Fig. 2, and one output information signal connection to each and all of the M rake fingers. Demodulation means 230 also comprises one combiner for each channel (i.e. user) which is connected to each and all of rake fingers 1-M, however, in Fig. 2 only one combiner 220 is illustrated. Combiner 220 is basically a conventional combiner having means for establishing the quality of the individual rake finger signals, and is adapted to output control signals regarding the quality of the user data signal, i.e. channel quality, to the rake finger control unit 205. In practise, the fingers and combiners in block 230 are normally realised by a set of DSP:s with suitable software, where each DSP handle about 15 channels (users). Control unit 205 has further a control signal input/output connection from/to each and all of the combiners, only combiner 220 shown in Fig. 2. According to the invention, the rake finger control unit 205 functions as a finger allocation switch for the different branches and combiners, i.e. it can allocate any of the fingers 1-M to any combiner serving either branch 201 or 202, i.e. interconnect any finger with branch 201 or 202, based on input control signals from the power control unit 210 and combiners, as explained below. In practice, the power supply control 210 and rake finger control 205 are realised in form of a software means running on a separate computer (not shown in Fig. 2) controlling hardware rake finger switches and breaker relays, interconnecting the main power supply circuit with the branch specific supply circuits at FP1', FP2' and FP3, respectively, explained below, and which computer thus also controls said DSP:s. The hardware switches interconnect a specific finger with a specific branch and the relays turn on/off the power supply circuits for the individual branches 201, 202, and the functional block 230, as described below. According to the invention, each finger is physically connected with each and all of the combiners, but instantaneously serves one combiner, as explained below.

In another embodiment, the demodulation means 230 is realised in form of a demodulator that can demodulate schemes like GMSK (Gaussian Minimum Shift Keying), PSK (Phase Shift Keying) and QAM (Quadrature Amplitude Modulation). The power control adaptation according to the invention is in this embodiment however analogous with the power control adaptation for the case of CDMA-demodulation.

According to the invention, at least one of said receiving branches, 201, is fed by power supply voltage control means 210 differentiating the power control for said at least one receiving branch, 201, from the other receiving branches, 202, as illustrated in figure 2. This means that the power may be turned on for one branch while being turned off for another branch. The power supply differentiation is based on control signals from manual control switches or formed by signal measurements, as explained below. Thus, feeding point FP1' supplies all the elements of branch 201 with power voltage by providing a branch specific power supply circuit (not shown), feeding point FP2' supplies all the elements of branch 202 with power voltage by providing a branch specific supply circuit (not shown), feeding point FP3 supplies all the elements of rake receiver unit 230 with power voltage by providing its own power supply circuit (not shown). The feeding points FP1', FP2' and FP3 are in turn fed from a main supply circuit, not shown in Fig. 2, and controlled by control signals from power control unit 210, which control signals turn on/off breaker relays (not illustrated) interconnecting the main power supply circuit with the branch specific supply circuits at FP 1', FP2' and FP3, respectively.

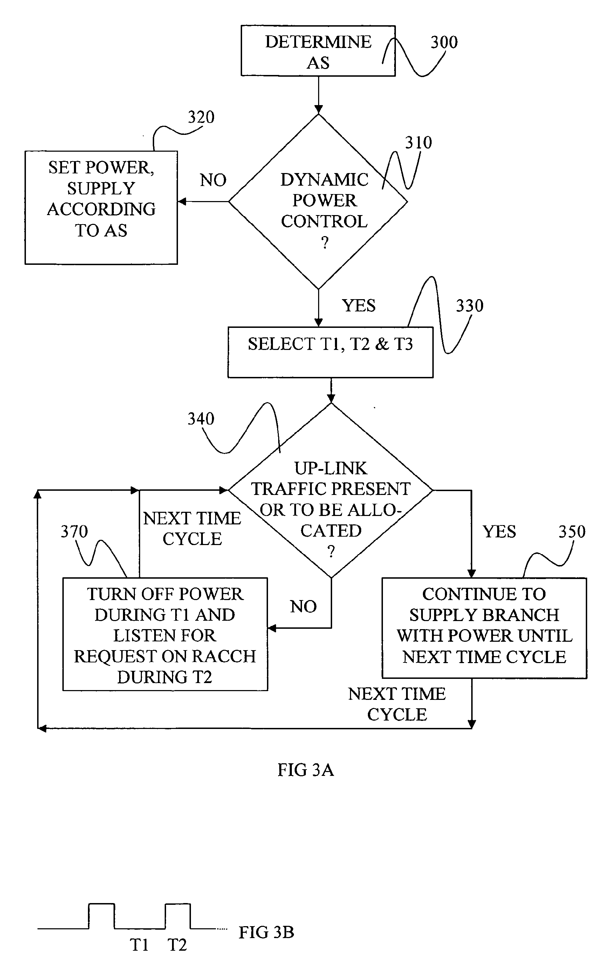

The flowchart in Fig. 3A illustrates the power control algorithm of the present invention. As stated above, the algorithm may be realised by a software program running on a separate processing means, not shown in Fig.2. This software and processing means thus realise the power supply control unit 210, rake finger control 205, and control said breaker relays and hardware switches, and also communicate with the combiners, by fetching signal quality information from said combiners and instructing them which fingers to exploit.

The power control has basically two modes, a start-up mode, illustrated by step 300 and an operation mode, illustrated by steps 310-370 in Fig. 3A. The algorithm always starts with step 300 whenever the base station is started or reset.

In step 300, the power control unit 210 first supply all branches and block 230 with power and thereafter determines and stores an antenna state, AS, for the base station. The power supply for block 230 is continuously maintained during the start-up mode and operation mode, according to the invention. The AS is information specifying what branches are actually connected with an antenna.

In one embodiment, the power control unit 210 determines said AS by communicating with an operation and maintenance tool software having stored information about what branches have manually been set to be "active", i.e. are connected with an antenna according to an operator's settings of said operation and maintenance software. This embodiment may be advantageous when the external antenna equipment to be connected with the receiving branch/es does not have a booster or LNA.

In another embodiment, the power control unit 210 determines said AS by measuring so called SPI-signals (Signal Power Intensity), not illustrated in Fig. 2. The SPI is a measure of the total signal power within a given time period and frequency range, i.e. the power of amplified thermal noise and possible information signal/s being fed into a receiving branch, 201, 202 from an antenna. The SPI is used in order to establish weather an antenna is connected or not. The SPI can be obtained by measuring the power at any point in the information signal path of the receiving branches, e.g. by sampling measurement, however, normally a point close to the antenna input connection is used. The measuring points and sample input connections to control unit 210 are not shown in Fig. 2. According to the invention, the SPI-estimates from the different branches are calculated in power supply control unit 210 where said SPI-estimates are compared with a pre-established threshold value. Branches with a SPI-estimate exceeding said threshold value are considered to be connected with an antenna, and the AS is updated accordingly. This may be advantageous when the external antenna equipment comprises boosters or LNA:s, and provides a possibility for an automatic adaptation of the power supply for the individual receiving branches in accordance with how the external equipment is connected to the base station receiver, i.e. the operator doesn't have to give specific information of what antennas have been connected/disconnected, but simply re/start the base station, after installation or reconfiguration.

When the control unit 210 has established said AS, it thereafter informs the finger control unit 205 about this established AS, in step 300. Furthermore, if any of said SPI-estimates exceed a second threshold value, control unit 210 short-cuts the LNA in the corresponding branch, by controlling breaker switch 203 or 204, in order to compensate for the high external amplification.

The algorithm then continues to step 310, where it is established weather a dynamic power control shall be applied or not. This is a choice to make when designing the base station, normally by setting a parameter value to "YES" or "NO" in the software program according to the invention.

In one embodiment, the parameter is set to "NO" and the dynamic power control is not applied; the algorithm continues to step 320 where the power control unit 210 constantly turn off the power supply for those receiving branches not connected with an antenna in accordance with the AS, and constantly turn on the power for those branches connected with an antenna according to the AS, by controlling the power circuit breaker relays at FP1' and FP2'. The rake finger control unit 205 is informed about this power setting.

In another embodiment, dynamic power control is applied, and the algorithm continues to step 330, in which suitable time periods T1, T2 and T3 are selected, illustrated in Fig. 3B. T1 is the time period during which a branch lacking up-link traffic and channel request is turned off, as explained below. T2 is the time period during which branches for the moment lacking allocated up-link traffic will listen for random access requests from mobile stations, as explained below with reference to step 370. In step 330, the power supply is also turned off for those branches not being connected with an antenna in accordance with the established AS. The steps 330-370 are carried out for each and all antenna connected branches in parallel, so it is enough to describe the procedure for one single branch. The rake finger control 205 is informed about said time periods T1, T2 and T3, in step 330. T3 defines one time cycle and T3=T1+T2. T1, T2 and T3 are normally chosen in accordance with the RACCH (Random Access Control Channel) scheme, i.e. synchronised with the RACCH.)

In step 340 it is determined if the branch receives up-link traffic or not or if traffic is to be allocated in the up-link or not, by communicating with higher level schemes and/or control functions in the radio network, i.e. the channel allocation control. If the branch has at least one allocated up-link traffic channel or if at least one traffic channel is to be allocated for the branch (i.e. a traffic channel request from the higher level channel allocation function is present), then the algorithm continues to step 350. If on the contrary the branch doesn't have any allocated up-link traffic channel, and no request to set up a new up-link traffic channel is present, the algorithm continues to step 370. The rake finger control 205 is informed accordingly in step 340 about the idle time period T1, with the power turned off, and the T2 time period, when the power is turned on, in case the algorithm is to proceed to step 370, and about the T3 time period during which the power is turned on, in case the algorithm is to proceed to step 350.

In step 350, the power supply for the branch is maintained until the next cycle begins, i.e. until a timer set to T3 lapse. Thereafter, the algorithm goes back to step 340.

In step 370, the power supply for the branch is turned off during T1, and then turned on during T2. When the power is turned on, the branch listens for random access requests from mobile terminals and relays such a request to higher level schemes in the radio network, i.e. to the random access scheme and channel allocation function. When the time period T3 has elapsed, the algorithm goes back to step 340.

If T1 is set e.g. to about 4 seconds and T2 e.g. to about 1 second, then antenna connected branches lacking up-link traffic consume only about 20% power in comparison with the embodiment according to step 320 above. The cost is that, statistically, a user will have to wait 2 seconds on average to get his call set up. However, this is normally not a problem.

Since the invention allows for a significant decrease of processing power to be wasted for receiving branches that are actually not connected with an antenna and/or which lack up-link traffic, the invention reduces the operational and maintenance cost for radio base stations and also increase the security of service.

In this way, the invention also provides a possibility to use base station receiver units in environments which until now have been considered to be too warm for those receivers, since a reduced power consumption directly translates into a reduced need for cooling. This increased versatility also translates into the possibility of larger production series, and thus a reduced cost of production.

In Fig. 2, the rake finger control unit 205 provides the possibility for at least 2 receiving branches, 201 and 202, to share a common set of rake fingers, i.e. a specific finger can be used by one branch for one period of time and be used by another branch during a second time period. The rake finger control according to the invention also provides the possibility for the combiners to exploit any of the rake fingers.

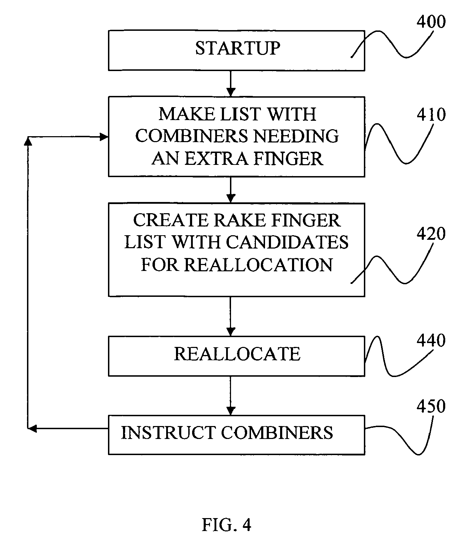

Fig. 4 illustrates the rake finger control according to the present invention. The finger control is basically made up by a fix finger allocation control during base station start-up and a continuous dynamic finger allocation control during operation.

In step 400, each combiner is allocated a fix number of rake fingers during start-up. Normally, according to the prior art, for pico base station each combiner has two associated fingers and for a macro base station each combiner has 5 associated fingers, but the invention makes it possible to use less fingers without sacrificing any significant signal quality by an effective finger allocation. Each branch has its own set of associated channels and corresponding combiners. In step 400, the rake finger control 205 reads the AS-information from power control 210 and allocate zero fingers for combiners initially associated with a branch not being connected with an antenna and at least one finger for each combiner associated with a branch connected with an antenna, according to the AS. A timer is thereafter initiated in step 400 and the algorithm proceeds to step 410 as soon as said timer has lapsed. A typical time period for said timer is e.g. 5 seconds.

In step 410, a list of combiners needing an extra finger is created and stored. This is achieved by fetching signal quality estimates from all active combiners and identifying those having an estimated signal quality below a given threshold value, which combiners are added to said list, together with their signal quality estimates, normally in form of a SNR-estimate or similar estimate (e.g. BER, FER) formed by conventional combiners. The estimated signal quality for the individual combiners is also fetched from these combiners and also included in said list. The list is finally updated by adding at least one combiner (to demodulate the RACCH) for those branches having a next coming T2 time period, as explained above.

In step 420, candidate rake fingers for re-allocation are identified, i.e. being candidates for the next coming processing time slot. All fingers allocated to non active combiners, i.e. idle combiners not demodulating any traffic channel, are such candidates, and are stored in a list. Each and all active combiners continuously determine, preferably by simulation, weather they can give away the least contributing finger without loosing too much in signal quality, i.e. without the quality going below an established threshold value, and this information is forwarded to the rake finger control 205, in step 420. Also, the actual estimated signal quality in case of giving away the least contributing finger for these combiners is read by finger control 205, together with information identifying the least contributing finger. These least contributing fingers currently allocated combiners affording to give up these fingers are added in the list of candidate fingers for reallocation. The list of candidate fingers is finally updated based on weather the next coming processing time slot is a T2 time slot, as explained above, for any branch. Those branches having a next coming T2-time slot, are allocated at least one finger for the RAACH channel, and the finger candidate list is updated accordingly. The algorithm then proceeds to step 440.

In step 440 a finger re-allocation is performed, by matching said list of candidate reallocation fingers with said list of combiners needing an extra finger. The overall goal is to maximize the overall signal quality and maintain as many active combiners as possible, i.e. communication sessions, and therefore the combiner with the lowest signal quality estimate has the highest priority to obtain one more allocated finger, and two more allocated fingers in case all combiners needing an extra finger have been allocated an extra finger but candidate fingers still remain, the combiner with the second worst quality estimate has the second highest priority to have one more finger allocated, and two more allocated fingers in case all combiners needing an extra finger have been allocated an extra finger but candidate fingers still remain, and so on. In this way, all candidate fingers are reallocated to combiners showing poor signal quality.

The algorithm then proceeds to step 450, in which the combiners are informed about the finger reallocation decision so as to adapt accordingly, i.e to exploit the proper finger/s according to the updated finger allocation in step 440 in the next coming processing time slot.

The algorithm then proceeds back to step 410 after step 450 for the finger reallocation control to update the finger allocation for the consecutive processing time slot following after said next coming processing time slot.

Normally, as stated, according to the prior art, for pico base station each combiner has two associated fingers and for a macro base station each combiner has 5 associated fingers, but the invention makes it in this way possible to use less fingers without sacrificing any significant signal quality by an effective finger allocation. This translates into a possibility of a more economical radio base station design.

The signal processing from INPUT 1 to OUTPUT in Fig. 2 shall now be described in more detail to better understand the invention. Thus, a RF-signal generated by one or more MSs is received by at least one antenna and relayed to INPUT 1 of branch 201, and thereafter amplified by LNA 105'. If the antenna has an external booster, then the LNA 203 is normally by-passed by short circuit means 203. The LNA determines the sensitivity of the receiver. The signal is then downconverted to an intermediate frequency by mixer 107' and thereafter filtered in a channel filter 109' wherein unwanted parts of the analog signal are removed so that the signal can be converted properly into a digital format by A/D converter 113', having a suitable sampling frequency and dynamic range. Optionally, the signal may be amplified by amplifier 111' before the A/D-conversion, performed in block 113'. The digital signal is thereafter filtered by filtering means 115' which removes unwanted signal components in adjacent frequency channels. The digital down converter 117' thereafter converts the intermediate digital signal to a digital base band signal. The rake finger control unit 205 thereafter relays the base band signal to specific set/s of rake finger/s, according to above described algorithm, and the specific channel data signals are extracted by each specific set of finger/s and combiner. That is, the rake finger/s apply/ies the specific channel spreading code on the input signal with a dynamically selected phase, in a conventional manner, the output signal/s from the individual fingers in a set of fingers thus representing a specific radio signal path. The combiner 220 then forms the demodulated user data signal and forwards this demodulated information signal to OUTPUT, by combining contributions from different rake fingers, in a conventional manner. The combiner also forms an estimate of the quality of the user data signal in a conventional manner and forwards this estimate to rake finger control unit 205. The estimate is normally a conventional signal to noise ratio, SNR. All combiners are continuously updated about what fingers they shall exploit, according to the above algorithm, and adapt accordingly.

As already stated, the invention can be used for any base station receiver having multiple antenna receiver branches, however, the invention is particularly advantageous for WCDMA base station receivers, e.g. when providing High Speed Downlink Package Access (HSDPA), since the downlink signals in this case have a relatively high computing gain and thus a lower geographical range in comparison with the uplink signals, making the receiver less sensitive restricted so that it works well with the finger allocation according to the invention.

Another advantageous usage of the invention is to use it together with distributed antenna systems, either traditional ones where the signal is sent through coaxial cables or systems where the RF signals are converted to optical signals that are distributed through optical fibers and converted back to electrical signals (optical repeaters). In this case, different receiver chains can be used for different rooms in a building and a receiver chain connected to an antenna in a room can be shut down if there are no user in that room, and the receiver chain can then be enabled for short periods of time to check if a user has appeared in that room and wants to set up a communication session by sending a request on the RACCH, as explained above.

Pico base stations that are mounted on a wall needs to have a smaller size than macro and micro base stations. The smaller size limits the number of DSPs that can be fit into the cabinet. Thus, the invention can advantageously be used in Pico base stations that are mounted on a wall.

The invention can be used in any base station system that use multiple antennas, both systems that use multiple antennas to get more narrow antenna lobes (smart antennas) and systems that use many antennas to increase capacity by diversity (MIMO, Multiple Input Multiple Output) and/or by adding additional traffic channels.

The description above is only an illustrative example and many modifications are possible without departing from the scope of the invention as defined by the following claims.

## Claims

1. A radio base station comprising at least two receiving branches (201, 202) interconnected with demodulation means (230) **characterised in that** at least one of said receiving branches (201) is fed by power supply control means (210) differentiating the power control for said at least one receiving branch (201) from the other receiving branches (202).

2. The radio base station according to claim 1 further **characterised in that** said power supply control means (210) is arranged so that the power supply is constantly turned off for those receiving branches not connected with an antenna and constantly turned on for those receiving branches connected with an antenna.

3. The radio base station according to claim 1 further **characterised in that** said power supply control means (210) is arranged so that the power supply for those receiving branches connected with an antenna but lacking up-link traffic is turned off during periodical time periods T 1 and turned on during periodical time periods T2.

4. The radio base station according to claim 3 further **characterised in that** said radio base station is arranged to listen for a traffic channel request sent from a mobile terminal on a Random Access Control Channel during said time period T2, and that T1 is about 4 seconds and T2 is about 1 second.

5. The radio base station according to any of claims 1-4 further **characterised in that** said demodulation means (230) is a rake receiver unit comprising a rake finger control unit (205), a set of rake fingers 1-M, and at least one combiner (220), and that said demodulation means (230) is arranged for a dynamic allocation of at least one rake finger, from said set of fingers 1-M, so that said at least one rake finger can be allocated to serve any one of said receiving branches (201, 202).

6. The radio base station according to claim 5 wherein said demodulation means (230) is arranged so that any one of said rake fingers 1-M can be allocated to serve said combiner (220).

7. The radio base station according to any of claims 1-6 wherein said power supply control means (210) comprises means for measuring the signal power at a point lying on the information signal path associated with said at least one receiving branch, (201).

8. The radio base station according to any of above claims further **characterised in that** said power supply control means (210) is arranged to control a switch for short-cutting at least one LNA in said at least one receiving branch (201).

9. A radio base station having at least two antenna receiving branches (201, 202) interconnected with demodulation means (230) **characterised in that** said demodulation means (230) is a rake receiver unit comprising a rake finger control unit (205), a set of rake fingers 1-M, and at least one combiner (220), and that said demodulation means (230) is arranged for a dynamic allocation of at least one rake finger, from said set of fingers 1-M, so that said at least one rake finger can be allocated to serve any one of said receiving branches (201, 202).

10. The radio base station according to claim 9 wherein said demodulation means (230) is arranged so that said combiner (220) can be allocated any one of said rake fingers 1-M.

11. A method for controlling the power supply of a radio base station comprising at least two receiving branches (201, 202) interconnected with demodulation means (230) **characterised in that** it comprises the following steps:
- establishing an antenna state, AS, for said base station, comprising information regarding which branches are connected with an antenna/external-device,
- differentiating the power supply for at least one of said branches (201) from the other branches (202) based on said AS.

12. The method according to claim 11 wherein the step of differentiating the power supply for at least one of said branches (201) from the other branches (202) based on said AS comprises the following steps:
- to constantly turn off the power supply for those receiving branches not connected with an antenna according to said AS, and,
- to constantly turn on the power supply for those receiving branches connected with an antenna according to said AS.

13. The method according to claim 11 wherein the step of differentiating the power supply for at least one of said branches (201) from the other branches (202) based on said AS comprises the following step:
- to turn off the power supply, during a periodical time period T1, for those receiving branches connected with an antenna according to said AS but lacking up-link traffic, and to turn on the power supply during periodical time periods T2, for said receiving branches connected with an antenna but lacking up-link traffic.

14. The method according to claim 13 further **characterised by** the following step:
- to listen for a traffic channel request sent from a mobile terminal on a Random Access Control Channel during said time period T2, and to set T1 to about 4 seconds and T2 to about 1 second.

15. The method according to any of claims 11-13 further **characterised by** the following steps:
- to realise said demodulation means (230) as a rake receiver unit comprising a rake finger control unit (205), a set of rake fingers 1-M, and at least one combiner (220), and,
- to dynamically allocate at least one rake finger, from said set of fingers 1-M, so that said at least one rake finger instantaneously serves any one of said receiving branches (201,202).

16. The method according to claim 15 further comprising the step of:
- allocating any one of said rake fingers 1-M to serve said combiner (220).

17. The method according to any of claims 11-16 further comprising the step of:
- measuring the signal power at a point lying on the information signal path associated with said at least one receiving branch, (201), and
- forming said AS based on said measurement.

18. A method for allocating rake fingers in a radio base station comprising demodulation means (230) **characterised by** the following steps:
- realising said demodulation means (230) in form of a rake receiver unit comprising a rake finger control unit (205), a set of rake fingers 1-M, and at least one combiner (220), and
- dynamically allocate at least one rake finger, from said set of fingers 1-M, so that said at least one rake finger instantaneously serves any one of said receiving branches (201,202).

19. The method according to claim 18 further **characterised by**:
- arranging said demodulation means (230) so that said combiner (220) can be allocated any one of said rake fingers 1-M.
